Europäisches Patentamt

European Patent Office

Office européen des brevets

(19)

(11) EP 0 131 378 B2

(12) NEW EUROPEAN PATENT SPECIFICATION

(45) Date of publication and mention
of the opposition decision:
**09.10.1996 Bulletin 1996/41**

(51) Int Cl.$^6$: **C01B 11/02**, C01D 5/00

(45) Mention of the grant of the patent:
**10.05.1989 Bulletin 1989/19**

(21) Application number: **84303834.0**

(22) Date of filing: **06.06.1984**

(54) **Process for the production of chlorine dioxide**

Verfahren zur Herstellung von Chlordioxid

Procédé de production de dioxyde de chlore

(84) Designated Contracting States:
**AT BE CH DE FR GB IT LI NL SE**

(30) Priority: **10.06.1983 CA 430111**
**30.06.1983 CA 431677**

(43) Date of publication of application:
**16.01.1985 Bulletin 1985/03**

(73) Proprietor: **Sterling Canada, Inc.**
**Houston, Texas 77002-4312 (US)**

(72) Inventor: **Fredette, Maurice Conrad Joseph**
**Mississauga, ON (CA)**

(74) Representative: **W.P. THOMPSON & CO.**
**Eastcheap House**
**Central Approach**
**Letchworth, Hertfordshire SG6 3DS (GB)**

(56) References cited:
DE-C- 1 051 255          US-A- 2 736 636
US-A- 2 881 052          US-A- 4 081 520
US-A- 4 105 751          US-A- 4 145 401
US-A- 4 154 809          US-A- 4 325 934

• E.S. Atkinson, R. Simonette: " ClO2-Comparison
of three processes", Pulp & Paper, April 22, 1968
, pp.32-35
• Partridge: " Preparation of bleaching
chemicals", 1979, pp.632-633
• W.H. Rapson: " The mechanism of formation of
chlorine dioxide from sodium chlorate", TAPPI,
Vol.39, 1956, pp.554-556

## Description

The present invention relates to the production of chlorine dioxide.

It is known to produce chlorine dioxide by reduction of an acid aqueous sodium chlorate solution using methanol, as described in U.S. Patent No. 2,881,052. The process, however, is quite slow, involves the handling of a large volume of liquid effluent and has a low efficiency. More recently there issued our U.S. Patent No. 4,081,520, wherein the problems of the prior process were overcome by the use of a single vessel generator-evaporator-crystallizer. The process described in our U.S. patent operates at high efficiency, produces no liquid effluent and has an acceptable production rate.

In the commercial implementation of the process of U.S. Patent No. 4,081,520, periodic random loss of chlorine dioxide production has been observed. This phenomenon is thought to arise from complete exhaustion of the trace quantities of chloride ions as a result of some unknown change in the process conditions of the reaction medium.

It is well known that all chlorine dioxide generating processes involving reaction with chlorate proceed in accordance with the equation:

$$ClO_3^- + Cl^- + 2H^+ \rightarrow ClO_2 + \tfrac{1}{2}Cl_2 + H_2O$$

In the processes of U.S. Patents Nos. 2,881,052 and 4,081,520, the chloride ions used in this process are formed in situ by reaction of methanol with the co-produced chlorine, so that significant quantities of chlorine do not result as a by-product and hence the chlorine dioxide contains little or no chlorine, depending on the overall efficiency of the process. If, for some reason, therefore, all the chloride ions are consumed by the above reaction, then production of chlorine dioxide will cease until chloride ions are produced by reduction of chlorate by methanol. This periodic random loss of chlorine dioxide production is termed herein a "white-out".

In accordance with the present invention, the problem of white-outs in the process of U.S. Patent No. 4,081,520 is eliminated while the other useful attributes thereof, most significantly high efficiency, are retained.

The high efficiency of production of chlorine dioxide from chlorate ions enjoyed by the process of U.S. Patent No. 4,081,520 is maintained, along with an acceptable rate of chlorine dioxide production. The addition of the chloride ions to the reaction medium results in the production of some chlorine along with the chlorine dioxide, but usually such coproduction of chlorine can be tolerated, and often is desirable, in a pulp mill environment.

In the aformentioned U.S. Patent No. 4,081,520, the minimum total acid normality of operability disclosed is 9 normal, since it had previously been found that total acid normality values below such minimum did not give rise to high efficiency. The experiments which lead to such a conclusion were done on a laboratory scale and involved a volume of reaction medium which resulted in an evaporation rate of 10 to 20 lb of gas phase (water vapour, chlorine dioxide and chlorines/hr/sq. ft. of surface area of reaction medium (about 50 to 100 kg of gas phase/hr/sq.m. of surface area).

Contrary to this data, it has now been surprisingly found that under commercial-scale plant conditions chlorine dioxide may be produced at high efficiency at total acid normality values below 9 normal and down to about 7 normal so that the process of the invention is carried out at a total acid normality of at least 7 normal and less than 9 normal.

Accordingly, the present invention provides a continuous process for the production of chlorine dioxide at high efficiency by reducing sodium chlorate with methanol in an aqueous acid reaction medium wherein aqueous sodium chlorate solution and sulphuric acid are continuously fed to a boiling aqueous acid reaction medium in a reaction zone maintained under a subatmospheric pressure, methanol is continuously fed to the reaction zone in sufficient quantity to form chlorine dioxide from the reaction medium, chlorine dioxide is continuously removed from the reaction zone in gaseous admixture with steam and dissolved in water to form an aqueous solution thereof, and sodium acid sulphate is continuously deposited from the aqueous medium in the reaction zone. The process is characterized in that (a) sulphuric acid is fed to the reaction medium to maintain a total acid normality of at least 7 normal, and (b) the reaction medium is boiled at an evaporation rate of 50 to 500 lb of gaseous admixture/hr/sq.ft (244 to 2441 kg/hr/sq.m) of surface area of reaction medium.

The operating parameters of the chlorine dioxide generation process may vary over a wide range. Concentrations of reactants are generally controlled by flow rates of aqueous sodium chlorate solution, sulphuric acid and methanol to the reaction zone, which typically takes the form of an unilocular single vessel generator-evaporator-crystallizer.

As noted above, the total acid normality of sulphuric acid in the reaction medium is maintained at at least 7 normal and may vary up to 9 normal. Sulphuric acid generally is ted to the reaction medium in the form of concentrated (93%) sulphuric acid.

Formation of chlorine dioxide at high efficiency can be effected on a commercial scale at a total acid normality below 9, in contrast to the teachings of our U.S. Patent No. 4,087,520. At the same time as the increased efficiency at lower acidity was observed, there was also observed a significant increase in the concentration of sodium chloride present in the reaction medium, typically to about 0.2 molar. The difference in behaviour is not satisfactorily explained, but is thought to arise from the substantially larger volume of reaction medium available for reaction under the plant conditions and hence the longer effective residence time and hence more efficient use of the methanol in the reaction medium, leading to decreased evaporative losses.

The larger scale of operation which gives rise to the ability to produce chlorine dioxide highly efficiently at a lower total acid normality also results in an increased evaporation rate in the range of about 50 to about 500 lb gases/hr/sq. ft. of surface area of reaction medium (about 244 to about 2441kg of gases/hr/sq. ft. of surface area). The evaporation rate is determined by the volume of liquid in the reaction zone and the rate of liquid recycle.

The concentration of sodium chlorate in the reaction medium in the process of the invention usually varies from about 0.2 to about 1.5 molar, preferably about 0.9 to about 1.1 molar. Sodium chlorate is fed to the reaction medium in the form of an aqueous solution thereof, usually having a concentration of about 5 to about 7 molar.

As mentioned above, under normal operating conditions, chloride ions are present in the reaction medium as a result of in situ reduction of chlorine by the methanol. When sodium chloride is continuously fed to the reaction medium, the concentration of chloride ions present in the reaction medium is not significantly greater than in the absence of such added sodium chloride, since the added chloride ions are converted to chlorine in the reaction zone. Usually, the chloride ion concentration in the reaction medium varies from about 0.1 to about 0.3 molar.

The chloride ions, when added to the reaction medium, are generally in the form of an aqueous sodium chloride solution, usually having a concentration of about 5 molar. The sodium chloride may be added as part of the sodium chlorate solution. Hydrochloric acid or hydrogen chloride also may be used to provide the chloride ions to the reaction medium.

The methanol may be fed to the reaction medium in the form of 100% methanol or as an aqueous solution of methanol containing greater than 1% by weight of methanol, although at least about 30% by weight is preferred to avoid excessive water feed to the process.

The reaction temperature usually varies from about 60° to about 90°C, preferably about 70° to about 75°C. Higher temperatures generally lead to faster reaction rates and hence production rates, but decomposition of chlorine dioxide at excessively high temperatures decreases the yield of chlorine dioxide.

The chlorine dioxide which is present in the gaseous stream produced from the reaction medium in the chlorine dioxide generator is formed into an aqueous solution of chlorine dioxide for use as a bleaching agent, usually by an initial cooling of the gaseous stream to condense a substantial proportion of the steam and a subsequent contact with a water stream in sufficient volume to dissolve all the chlorine dioxide. In the two-stage condensation and dissolution operation, the initial condensation may be effected by cooling to a temperature of about 3° to about 60°C, preferably about 7° to about 60°C, while the subsequent dissolution may be effected by contact of the cooled gas stream from the condensation step with water having a temperature of about 0° to about 22°C, preferably about 3° to about 10°C. Depending on the flow rate of water relative to chlorine dioxide production and the temperatures of condensation and dissolution water, a chlorine dioxide solution is formed having a chlorine dioxide concentration ranging from about 6 to about 20 grams per litre, preferably about 10 to about 15 grams per litre.

When sodium chloride is continuously fed to the reaction medium, chlorine is formed along with the chlorine dioxide. This chlorine is dissolved in the chlorine dioxide solution and is present in an amount from about 0.1 to about 2.0 grams per litre, preferably about 0.1 to about 0.5 grams per litre.

The quantity of sodium chloride or other source of chloride ion, such as, hydrochloric acid, which is added to the reaction medium should not exceed that quantity which coproduces chlorine with the chlorine dioxide beyond the solubility limit of chlorine in the chlorine dioxide solution, so as to avoid the necessity for separate chlorine dissolution equipment.

The sodium acid sulphate, which is deposited from the reaction medium, usually is in the form of sodium bisulphate (NaHSO$_4$) or sodium sesquisulphate (Na$_3$H(SO$_4$)$_2$). The acid values of this sodium acid sulphate may be recovered therefrom by converting the acid sulphate to neutral sodium sulphate by treatment with Water and methanol, as described in our U.S. Patent No. 4,325,934, with the sulphuric acid recovered thereby being recycled to the reaction zone. Alternatively, the sodium acid sulphate may be added to the reaction medium of another chlorine dioxide producing process in which sodium chlorate and sodium chloride and/or hydrogen chloride are reacted in an acid aqueous medium at a total acid normality of less than about 4.8 normal, the sodium acid sulphate being used to provide all or part of the acid requirement of such process, as described in our U.S. Patent No. 3,789.108.

The sodium acid sulphate usually is removed from the reaction vessel as a slurry with reaction medium, the sodium acid sulphate is separated from the reaction medium, and the reaction medium is recycled to the reaction zone, usually after addition of fresh reactants thereto.

Chlorine dioxide is known to be spontaneously explosive at high partial pressures. In the process of U.S. Patent No. 4,081,520, chlorine dioxide is diluted with steam generated by the boiling of the reaction medium and this steam, combined with a low pressure of operation, typically around 133 mbar, maintains the chlorine dioxide below explosive concentrations. At these low pressures, the concentration of chlorine dioxide at the base of the absorption tower wherein the chlorine dioxide is dissolved in water to form the aqueous chlorine dioxide solution, following condensation of the bulk of the steam, remains at a safe level.

The process, however, may be operated at higher but still subatmospheric pressures by introducing sufficient purge air to maintain the partial pressure of chlorine dioxide below about 120 mbar. The actual pressure of operation will depend largely on the temperature of the reaction medium, but may vary wideiy from 80 to 533 mbar, preferably about 120 to 253 mbar. The ability to modify the pressure of operation by the utilization of a controlled amount of purge air is advantageous in situations where a chlorine dioxide generating plant designed to use the higher subatmospheric pressure is used to effect chlorine dioxide formation by reduction of sodium chlorate with methanol, for example, a plant designed to handle large quantities of chlorine coproduced with the chlorine dioxide.

The invention is illustrated by the following Examples:

Example 1

A 15 tons (tonnes) per day capacity chlorine dioxide generator was run wherein acid sodium chlorate solution was reduced with methanol while the reaction medium was boiled under a subatmospheric pressure. Sodium chlorate was continuously fed to the reaction medium as a 5M aqueous solution formed from crystal sodium chlorate at a flow rate of 9.2 USGPM (35 litres/min) sufficient to maintain a chlorate concentration of 1M in the reaction medium. Sulphuric acid was also continuously fed to the reaction medium as 93% $H_2SO_4$ at a flow rate of 2.0 USGPM (7 litres/min) sufficient to maintain an acidity of reaction medium of about 9 to 10N. Methanol was continuously fed to the reaction medium as a 50% w/w aqueous solution at a flow rate of 0.8 USGPM (3 litres/min). The average temperature for the generator liquor was about 80°C and sodium sesquisulphate crystals were removed from the generator.

The generator was run under substantially steady state conditions to produce chlorine dioxide, first in the absence of deliberately added sodium chioride and subsequently with the continuous addition of 0.5 USGPM (1.9 litres/mini of 5M sodium chloride solution. Offgases from the generator were cooled to a temperature of 30°C to condense the steam and the cooled gases were dissolved in water in an absorption tower using water having a temperature of 10°C. The chemical efficiency of conversion of chlorate ions to chlorine dioxide was determined in each case.

A chemical efficiency of about 96% was observed both for the run when deliberately added sodium chloride was omitted and for the run when sodium chloride was deliberately added. During the period of time that sodium chloride was deliberately added, the chlorine dioxide solution obtained contained about 10 gpl chlorine dioxide and about 0.7 to 0.8 gpl chlorine, while during the initial run when sodium chloride addition was not effected, the chlorine dioxide solution contained about 10 gpl chlorine dioxide and about 0.5 to 0.6 gpl chlorine. In addition, an increase in production rate of chlorine dioxide production was observed during the period when sodium chloride was deliberately added to the reaction medium.

Example 2

A 14 tons (tonnes) per day capacity chlorine dioxide generator was run wherein acid sodium chlorate solution was reduced with methanol while the reaction medium was boiled under a subatmospheric pressure. Sodium chlorate was continuously fed to the reaction medium as a 5M aqueous solution formed from crystal sodium chlorate at a flow rate of 9.2 USGPM (35 litres/min) sufficient to maintain a chlorate concentration of 1M in the reaction medium. Sulphuric acid was also continuously fed to the reaction medium as 93% $H_2SO_4$ at a flow rate sufficient to maintain the desired acidity of reaction medium. Methanol was continuously fed to the reaction medium as a 50% w/w aqueous solution at a flow rate of 0.8 USGPM (3 litres/min). The average temperature for the generator liquor was about 80°C and sodium sesquisulphate crystals were removed from the generator.

The generator was run under substantially steady state conditions to produce chlorine dioxide, at varying total acid normality levels. Offgases from the generator were cooled to a temperature of 30°C to condense the steam and the cooled gases were dissolved in water in an absorption tower using water having a temperature of 10°C. The chemical efficiency of conversion of chlorate ions to chlorine dioxide was determined in each case.

The results are reproduced in the following Table I, Run No.2 being for comparison purposes:

TABLE I

| | Run No. | | |
|---|---|---|---|
| | 1 | 2 | 3 |
| Total Acid Normality (N) | 7.3 to 8.7 | 9 to 10 | 7.8 to 8.8 |
| Length of run (hrs) | 12 | 12 | 8.5 |
| Efficiency (%) | 98% | >99% | >99% |

It will be seen from the results of the above Table I, that high efficiency operation was maintained at total acid normality values below 9 normal.

In summary of this disclosure, the present invention relates to improvements in the operability of highly efficient chlorine dioxide processes without adversely affecting that efficiency. Modifications are possible within the scope of the invention.

## Claims

1. A continuous process for the production of chlorine dioxide at high efficiency by reducing sodium chlorate with methanol in an aqueous acid reaction medium wherein aqueous sodium chlorate solution and sulphuric acid are continuously fed to a boiling aqueous acid reaction medium in a reaction zone maintained under a subatmospheric pressure, methanol is continuously fed to the reaction medium in sufficient quantity to form chlorine dioxide from the reaction medium, chlorine dioxide is continuously removed from the reaction zone in gaseous admixture with steam and dissolved in water to form an aqueous solution thereof, and sodium acid sulphate is continuously deposited from the aqueous medium in the reaction zone, characterised in that:

   sulphuric acid is fed to the reaction medium to maintain a total acid normality of at least 7 normal and less than 9 normal and the reaction medium is boiled at an evaporation rate of 50 to 500 lb of gaseous admixture/hr/ sq.ft (244 to 2441 kg/hr/sq.m) of surface area of reaction medium.

2. The process claimed in claim 1, characterised in that the reaction zone is maintained under a subatmospheric pressure of 80 to 530 mbar at the boiling point of the reaction medium, and that air is introduced to the reaction zone to maintain the partial pressure of chlorine dioxide in the gaseous admixture less than 120 mbar.

## Patentansprüche

1. Verfahren zur kontinuierlichen Herstellung von Chlordioxid mit hohem Wirkungsgrad durch Reduzieren von Natriumchlorat mit Methanol in einem wäßrigen, sauren Reaktionsmedium, bei dem eine wäßrige Natriumchloratlösung und Schwefelsäure kontinuierlich einem siedenden, wäßrigen, sauren Reaktionsmedium in einer Reaktionszone zugegeben werden, welche unter einem Unterdruck steht, Methanol dem Reaktionsmedium in einer so ausreichenden Menge kontinuierlich zugegeben wird, daß Chlordioxid aus dem Reaktionsmedium gebildet wird, Chlordioxid kontinuierlich aus der Reaktionszone in einem gasförmigen Gemisch mit Dampf und gelöst in Wasser abgezogen wird, um eine wäßrige Lösung hiervon zu bilden, und Natriumhydrogensulfat kontinuierlich aus dem wäßrigen Medium der Reaktionszone abgeschieden wird, **dadurch gekennzeichnet**:

   Schwefelsäure dem Reaktionsmedium zugegeben wird, um die gesamte Säurenormalität bei wenigstens 7 normal und weniger als 9 normal aufrechtzuerhalten, und das Reaktionsmedium bei einer Verdampfungsrate von 50 bis 500 lb des gasförmigen Gemisches/hr/sq. ft (244 bis 2441 kg/hr/m$^2$) der Oberflächeneinheit des Reaktionsmediums zum Sieden gebracht wird.

2. Verfahren nach Anspruch 1, **dadurch gekennzeichnet**, daß die Reaktionszone unter einem Unterdruck von 80 bis 530 mbar am Siedepunkt des Reaktionsmediums steht, und daß Luft der Reaktionszone zugeleitet wird, um den Partialdruck von Chlordioxid in dem gasförmigen Gemisch auf weniger als 120 mbar zu halten.

## Revendications

1. Un procédé pour la production en continu de bioxyde de chlore avec une efficacité élevée en réduisant le chlorate de sodium au moyen de méthanol dans un milieu réactionnel aqueux acide, dans lequel la solution de chlorate de sodium aqueuse et l'acide sulfurique sont introduits en continu dans un milieu réactionnel aqueux acide à l'ébullition dans une zone de réaction maintenue à une pression inférieure à la pression atmosphérique, le méthanol est introduit en continu dans le milieu réactionnel en quantité suffisante pour former du bioxyde de chlore à partir du milieu réactionnel; le bioxyde de chlore est prélevé en continu à partir de la zone réactionnelle dans un mélange gazeux avec de la vapeur et est dissous dans l'eau pour former une solution aqueuse de bioxyde de chlore, et du sulfate de sodium acide se dépose en continu du milieu aqueux dans la zone de réaction, caractérisé en ce que :

   de l'acide sulfurique est introduit dans le milieu réactionnel pour maintenir une normalité acide totale d'au moins 7N, et inférieure à 9N, et le milieu réactionnel est porté à l'ébullition à une vitesse d'évaporation d'environ 50 à environ 500 lb de mélange gazeux/h/pied carré (244 à 2441 kg/h/m$^2$) de surface du milieu réactionnel.

2. Procédé selon la revendication 1, caractérisé en ce que la zone réactionnelle est maintenue sous une pression supérieure à la pression atmosphérique d'environ 80 à 530 mbars au point d'ébullition du milieu réactionnel, et que de l'air est introduit dans la zone réactionnelle pour maintenir la pression partielle de bioxyde de chlore dans le mélange gazeux, inférieure à 120 mbars.